# EUROPÄISCHE PATENTSCHRIFT

(11) **EP 0 822 025 B1**
(45) Veröffentlichungstag und Bekanntmachung des Hinweises auf die Patenterteilung: **02.05.2003**
(21) Anmeldenummer: 96112577.0
(22) Anmeldetag: 03.08.1996
(51) Int. Cl.: B23K 11/00, B23K 11/10, B23K 11/14, B23K 11/16, F28F 1/00, F28F 3/02, F28F 9/26

(54) **Verfahren zur Herstellung von korrosionsbeständigen Wärmeübertragern**
Method of manufacturing corrosion resistant heat exchangers
Procédé de fabrication d'échangeurs de chaleur résistants à la corrosion

(43) Veröffentlichungstag der Anmeldung: 04.02.1998
(73) Patentinhaber: Balcke-Dürr GmbH, 40882 Ratingen (DE)
(72) Erfinder: Podhorsky,Miroslan,Dr.-Ing., 40882 Ratingen (DE); Leitz,Richard,Dipl.-Ing., 40721 Hilden (DE); Holten,Wolfgang,Dipl.-Ing., 40625 Düsseldorf (DE)
(74) Vertreter: Stenger, Watzke & Ring Patentanwälte

(56) Entgegenhaltungen:
- EP-A- 0 106 261
- DE-A- 4 322 405
- JP-A- 62 148 080
- US-A- 3 702 021
- US-A- 3 992 602

## Beschreibung

Die Erfindung betrifft ein Verfahren zur Herstellung von korrosionsbeständigen Wärmeübertragern unter Verwendung von zumindest auf einem Teil ihrer Oberfläche mit die Wärmeübertragungsfläche vergrößernden Rippen versehenen Rohren, wobei die Rohre und/oder Rippen aus Leichtmetall, insbesondere Aluminium, oder aus mit Leichtmetall beschichteten oder plattierten Werkstoffen bestehen und mindestens einiger Teilbereiche der Berührungsfläche zwischen dem Fußbereich der Rippen und der Mantelfläche der Rohre verschweißt sind.

Aus der DE 43 22 405 C2 sind rohrfömige Elemente für Wärmeübertrager sowie ein Verfahren zu ihrer Herstellung bekannt, wobei die Rohre und die zumindest auf einem Teil ihrer Oberfläche befestigten Rippen aus Stahl bestehen und miteinander durch ein Kondensator-Entladungs-Schweißverfahren verschweißt werden. Wegen der spezifischen Eigenschaften von Leichtmetall, vorzugsweise Aluminium, insbesondere infolge der schnellen Bildung von Oxidschichten ist das aus der DE 43 22 405 C2 bekannte Verfahren nicht anwendbar, wenn die Rohre und/oder Rippen der Wämeübertragungselemente aus Leichtmetall oder aus mit Leichtmetall beschichteten oder plattierten Werkstoffen bestehen.

Um derartige, aus Leichtmetall bestehende oder mit einer Beschichtung aus Leichtmetall versehene Wärmeübertragungselemente herstellen zu können, wird mit der EP 0 417 894 A2 ein Herstellungsverfahren vorgeschlagen, bei dem aluminiumbeschichtete Stahlrohre mit Rippen aus Aluminium miteinander dadurch verlötet werden, daß sie für eine bestimmte Zeitspanne einer Temperaturerhöhung ausgesetzt werden, welche ein zumindest teilweises Schmelzen und damit Ineinanderverlaufen der Aluminiumschichten bewirkt, ohne das Entstehen eines Eisen-Aluminium-Verbundes hervorzurufen. Da die Randbedingungen des aus der EP 0 417 894 A2 bekannten Lötverfahrens zur Erzielung einer festen Verbindung zwischen Rippe und Rohr sehr exakt eingehalten werden müssen, ist dieses bekannte Verfahren sehr aufwendig und für eine wirtschaftliche großtechnische Anwendung nicht geeignet.

Der Erfindung liegt die **Aufgabe** zugrunde, ein Verfahren der eingangs beschriebenen Art zur großtechnischen Herstellung von korrosionsbeständigen Wärmeübertragem unter Verwendung von zumindest auf einem Teil ihrer Oberfläche mit die Wärmeübertragungsfläche vergrößernden Rippen versehenen Rohren zu schaffen, das für Rohre und/oder Rippen aus Leichtmetall, insbesondere Aluminium, oder aus mit Leichtmetall beschichteten oder plattierten Werkstoffen geeignet ist.

Die **Lösung** dieser Aufgabenstellung durch die Erfindung ist dadurch gekennzeichnet, daß vor dem eigentlichen Schweißvorgang die Oxidschichten an den Berührungsflächen durch mindestens einen Stromimpuls mit hoher Energie und kurzer Zeitdauer zerstört werden.

Die gemäß einem weiteren Merkmal der Erfindung durch Widerstandsschweißen, insbesondere Kondensatorentladungsschweißen erfolgende Verschweißung mindestens einiger Teilbereiche der Berührungsflächen zwischen dem Fußbereich der Rippen und der Mantelfäche der Rohre stellt sicher, daß auch bei der großtechnischen Anwendung eine zuverlässige Verbindung zwischen den Rippen und den Rohren erfolgt, obwohl diese aus Leichtmetall oder aus mit Leichtmetall beschichteten oder plattierten Werkstoffen bestehen.

Um eine mangelhafte Verschweißung infolge der schnellen Oxidbildung auf der aus Leichtmetall bestehenden Oberfläche der Rohre und Rippen zu vermeiden, werden gemäß einem weiteren Merkmal der Erfindung vor dem eigentlichen Schweißvorgang die Oxidschichten an den Berührungsflächen durch mindestens einen Stromimpuls mit hoher Energie und kurzer Zeitdauer zerstört. Die Berührungsflächen zwischen den Rippen und den Rohren können hierbei gemäß einer Weiterbildung der Erfindung während des Verschweißens bzw. während und nach der Zerstörung der Oxidschichten mit inertem Gas, insbesondere Stickstoff gespült werden. Die Spülung erfolgt hierbei gezielt und mit der notwendigen Intensität entsprechend den jeweils herrschenden Randbedingungen.

Bei einer bevorzugten Ausführungsform der Erfindung ist es möglich, mindestens eine der einander berührenden Flächen vor dem Verschweißen mit einem Flußmittel zu versehen, das in flüssigem, pastösem oder pulverartigem Zustand sein kann.

Um bei dem erfindungsgemäßen Herstellungsverfahren einen zu hohen Wärmeeintrag in die Rohre und Rippen zu vermeiden, können gemäß einem weiteren Merkmal der Erfindung mindestens einige Teilbereiche der Berührungsflächen zwischen den Rippen und den Rohren miteinander verklebt werden. Hierdurch ergeben sich auf Teilbereichen miteinander verschweißte und auf Teilbereichen miteinander verklebte Rippenrohre, wobei die Eigenschaften des Klebstoffes den Werkstoffen des Rohres bzw. der Rippe, der mechanischen Belastung, der Einsatztemperatur sowie der Anforderung an eine ausreichende Wärmeleitfähigkeit genügen müssen.

Mit der Erfindung wird weiterhin vorgeschlagen, mindestens einige Teilbereiche der Berührungsflächen zwischen den Rippen und den Rohren durch Durchsetzfügen miteinander formschlüssig zu verbinden. Bei einem derartigen Durchsetzfügen werden bestimmte Teile der Rippen und des Rohres vor oder während des Schweißvorganges gemeinsam verformt, so daß sich zusätzlich zu den verschweißten Teilbereichen und ggf. zu den miteinander verklebten Teilbereichen örtlich formschlüssige Verbindungen zwischen den Berührungsflächen zwischen Rippen und Rohr ergeben.

Um im Bereich dieser Fügestellen die Verbindung zwischen Rippe und Rohr zu verbessern, wird mit der Erfindung schließlich vorgeschlagen, im Bereich mindestens einiger Fügestellen zusätzlich zum hierdurch erzielten Formschluß eine Verschweißung und/oder Verklebung vorzusehen.

Auf der Zeichnung sind zwei Ausführungsbeispiele eines nach dem erfindungsgemäßen Verfahren hergestellten Rippenrohres dargestellt, und zwar zeigen:
- Fig. 1: einen Längsschnitt durch ein Rippenrohr mit auf einer Flachseite des Rohres angebrachten Rippen,
- Fig. 2: einen Querschnitt durch das Rippenrohr gemäß der Schnittlinie II-II in Fig. 1,
- Fig. 3: eine vergrößerte Schnittdarstellung des in Fig. 2 eingekreisten Bereiches III,
- Fig. 4: eine wiederum vergrößerte Darstellung des Bereiches IV in Fig. 3 bei dem Verfahrensschritt zur Beseitigung der Oxidschicht,
- Fig. 5: eine der Fig. 4 entsprechende Schnittdarstellung im verschweißten Zustand,
- Fig. 6: eine schematische Darstellung des Durchsetzfügens anhand einer Schnittdarstellung im Ausgangszustand,
- Fig. 7: eine der Fig. 6 entsprechende Darstellung nach Beendigen des Durchsetzfügens und
- Fig. 8: den Endzustand der Fügestelle in einem Schnitt entsprechend den Figuren 6 und 7.

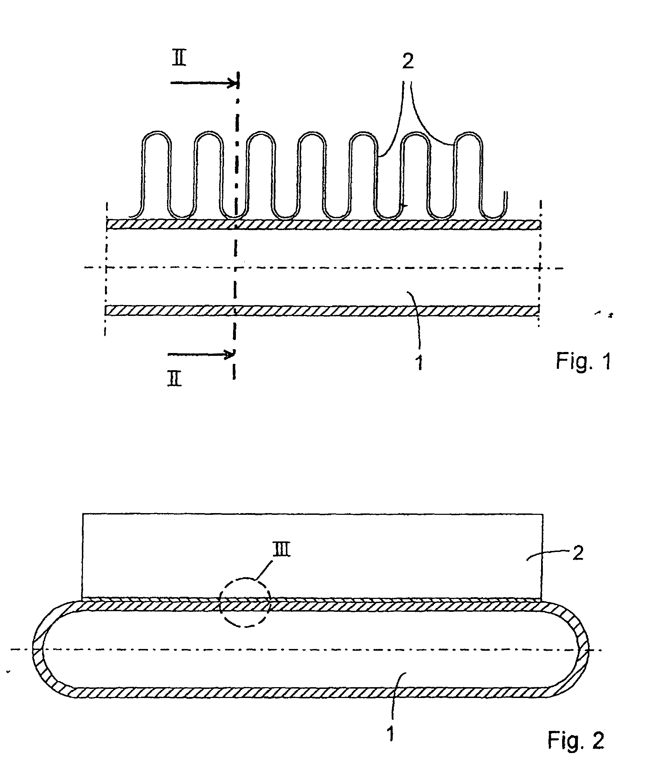

Die Figuren 1 und 2 zeigen schematisch ein Ausführungsbeispiel eines zur Herstellung von korrosionsbeständigen Wärmeübertragern einzusetzenden flachen Rohres 1, das auf der Oberfläche einer seiner Flachseiten mit die Wärmeübertragungsfläche vergrößernden Rippen 2 versehen ist. Beim Ausführungsbeispiel werden diese Rippen 2 durch ein gewelltes Band gebildet, dessen Wellen rechtwinklig zur Rohrlängsachse verlaufen und mindestens in Teilbereichen der Berührungsfläche zwischen dem Fußbereich der Rippen 2 und der Mantelfläche des Rohres 1 mit dem Rohr 1 verschweißt sind.

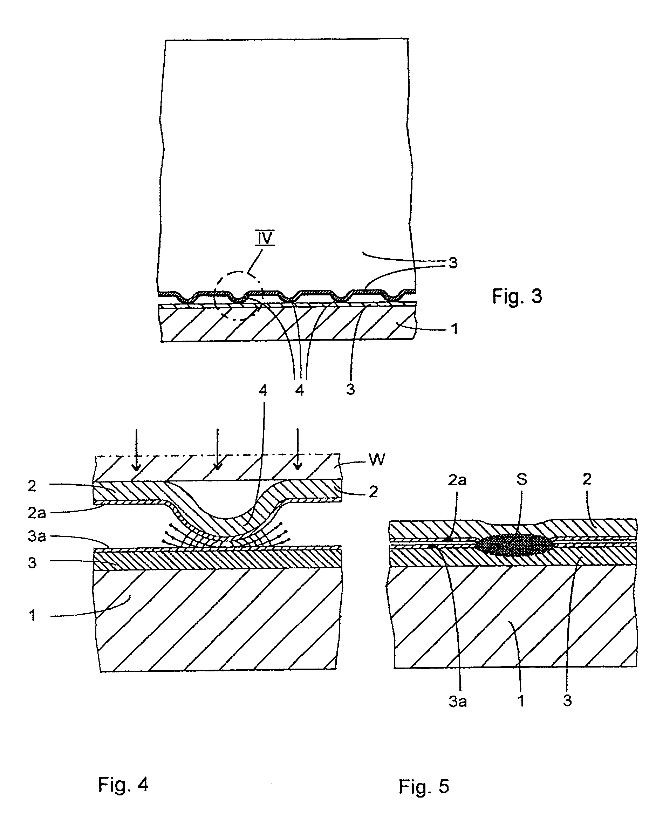

Wie aus der vergrößerten Schnittdarstellung des in Fig. 2 eingekreisten Bereiches III in Fig. 3 hervorgeht, besteht beim dargestellten Ausführungsbeispiel das Rohr 1 aus Stahl; es ist auf seiner Mantelfläche mit einer Beschichtung 3 aus Leichtmetall, insbesondere aus Aluminium oder einer Aluminiumlegierung versehen. Die Rippen 2 bestehen ebenfalls aus Leichtmetall, insbesondere Aluminium. Um für die Verschweißung der Rippen 2 mit der Beschichtung 3 des Rohres 1 konkrete Schweißstellen zu schaffen, sind die Rippen 2 im Bereich ihrer Berührungsflächen mit der durch die Beschichtung 3 gebildeten Mantelfläche des Rohres 1 mit Erhebungen 4 versehen, die deutlich in der vergrößerten Schnittdarstellung in Fig. 3 gezeichnet sind. Eine dieser Erhebungen 4 ist weiterhin in der nochmals vergrößerten Schnittdarstellung in Fig. 4 gezeigt.

In dieser Fig. 4 ist zu erkennen, daß sich auf der freien Oberfläche sowohl der Beschichtung 3 des Rohres 1 als auch der Rippe 2 eine Oxidschicht 3a bzw. 2a gebildet hat, die vor dem eigentlichen Schweißvorgang durch mindestens einen Stromimpuls mit hoher Energie und kurzer Zeitdauer zerstört werden. Die Schnittdarstellung in Fig. 4 zeigt die Ausbildung eines Art Lichtbogens zwischen der Beschichtung 3 des Rohres 1 und der Rippe 2 im Bereich der Erhebung 4; durch diesen durch einen Stromimpuls mit hoher Energie für eine kurze Zeitdauer erzeugten Lichtbogen werden die Oxidschichten 2a und 3a zerstört, so daß bei dem sich anschließenden Schweißvorgang eine gute und dauerhafte Schweißverbindung erzeugt wird. Beim Verschweißen wird die Rippe 2 mit ihren Erhebungen 4 durch ein Werkzeug W, das in Fig. 4 angedeutet ist, gegen die Oberfläche des mit der Beschichtung 3 versehenen Rohres 1 gedrückt. Die Verschweißung erfolgt vorzugsweise durch Widerstandsschweißen, insbesondere Kondensatorentladungsschweißen.

Während des Verschweißens bzw. während und nach der Zerstörung der Oxidschichten 2a und 3a können die Berührungsflächen zwischen dem mit der Beschichtung 3 versehenen Rohr 1 und den Rippen 2 mit inertem Gas, insbesondere Stückstoff gespült werden, um eine erneute Bildung von Oxidschichten zu vermeiden. Außerdem ist es möglich, mindestens eine der einander berührenden Flächen vor dem Verschweißen mit einem Flußmittel zu versehen, das flüssig, pastös oder pulverartig sein kann.

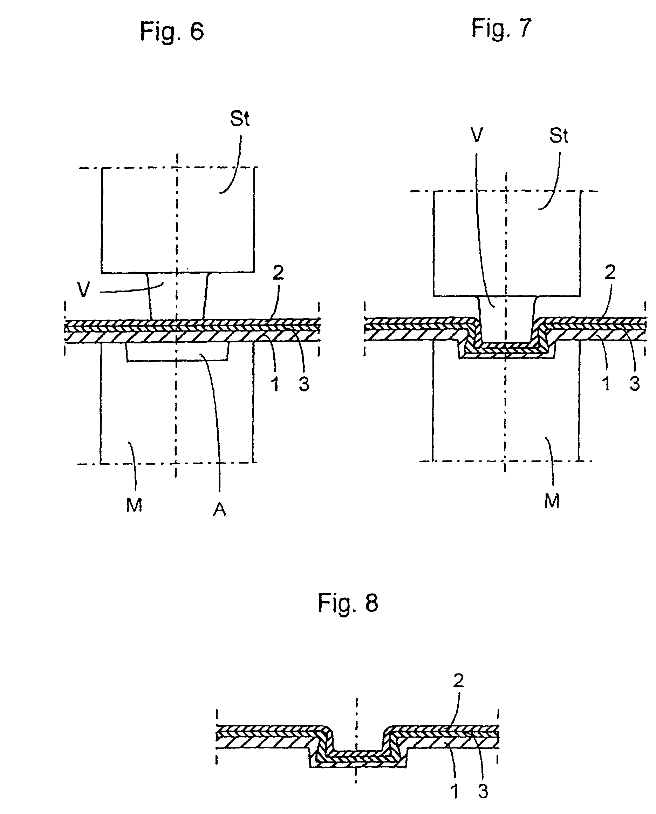

Wie aus der der Fig. 4 entsprechenden Schnittdarstellung gemäß Fig. 5 hervorgeht, ergibt sich durch das voranstehend beschriebene Verfahren eine zuverlässige und dauerhafte Verschweißung der Rippen 2 mit der Beschichtung 3 des Rohres 1, obwohl Rippe 2 und Rohr 1 aus Leichtmetall oder aus mit Leichtmetall beschichteten oder plattierten Werkstoffen bestehen. Die Schweißstelle S ist in Fig. 5 im Querschnitt zu erkennen.

Um die Verbindung zwischen dem mit einer Beschichtung 3 aus Leichtmetall versehenen Rohr 1 aus Stahl und den Rippen 2 aus Leichtmetall zu verbessern, können gemäß dem in den Figuren 6 bis 8 dargestellten zweiten Ausführungsbeispiel mindestens einige Teilbereiche der Berührungsflächen zwischen den Rippen 2 und dem Rohr 1 durch Durchsetzfügen miteinander formschlüssig verbunden werden. Ein derartiger Durchsetzfügevorgang ist in den Schnittdarstellungen der Figuren 6, 7 und 8 schematisch dargestellt.

Die Fig. 6 zeigt einen Schnitt durch ein mit einer Beschichtung 3 aus Leichtmetall versehenes Rohr 1 aus Stahl sowie durch eine Rippe 2 im Bereich einer Berührungsfläche zwischen diesen Teilen. Die Unterseite des Rohres 1 liegt gemäß Fig. 6 auf einer Matrize M, die mit einer Aussparung A versehen ist. Im Bereich dieser Aussparung A greift der Vorsprung V eines Stempels St an. Die Querschnittsabmessungen des Stempels St sind hierbei geringer als die der Aussparung A in der Matrize M.

Wenn nunmehr gemäß Fig. 7 der Stempel St mit seinem Vorsprung V in die Aussparung A der Matrize M gedrückt wird, verformt sich sowohl das Material des Rohres 1 und seiner Beschichtung 3 als auch der Rippe 2, so daß sich die in Fig. 7 dargestellte formschlüssige Verbindung zwischen dem mit der Beschichtung 3 versehenen Rohr 1 und der Rippe 2 ergibt.

Die nach Entfernen des aus Matrize M und Stempel St bestehenden Werkzeuges in Fig. 8 im Schnitt dargestellte Fügestelle zeigt, daß sich die Materialien von Rohr 1, Beschichtung 3 und Rippe 2 aufgrund des beim Durchsetzfügen eintretenden Fließens formschlüssig ineinander verkeilt haben, so daß das beschriebene Durchsetzfügen eine zuverlässige Verbindung zwischen Rippe 2 und Rohr 1 schafft. Selbstverständlich kann auch im Bereich mindestens einiger dieser Fügestellen zusätzlich zum hierdurch erzielten Formschluß eine Verschweißung stattfinden.

Um einen zu hohen Wärmeeintrag in das Rohr 1 und die Rippen 2 zu vermeiden, können mindestens einige Teilbereiche der Berührungsflächen zwischen den Rippen 2 und dem Rohr 1 miteinander verklebt werden. Hierdurch ergeben sich auf Teilbereichen miteinander verschweißte und auf Teilbereichen miteinander verklebte Rippenrohre.

### Bezugszeichenliste

- 1: Rohr
- 2: Rippe
- 2a: Oxidschicht
- 3: Beschichtung
- 3a: Oxidschicht
- 4: Erhebung

- A: Aussparung
- M: Matrize
- S: Schweißstelle
- St: Stempel
- V: Vorsprung
- W: Werkzeug

## Patentansprüche

1. Verfahren zur Herstellung von korrosionsbeständigen Wärmeübertragern unter Verwendung von zumindest auf einem Teil ihrer Oberfläche mit die Wärmeübertragungsfläche vergrößernden Rippen (2) versehenen Rohren (1), wobei die Rohre (1) und/oder Rippen (2) aus Leichtmetall, insbesondere Aluminium, oder aus mit Leichtmetall beschichteten oder plattierten Werkstoffen bestehen und mindestens einiger Teilbereiche der Berührungsfläche zwischen dem Fußbereich der Rippen (2) und der Mantelfläche der Rohre (1) verschweißt sind,
**dadurch gekennzeichnet,**
**daß** vor dem eigentlichen Schweißvorgang die Oxidschichten an den Berührungsflächen durch mindestens einen Stromimpuls mit hoher Energie und kurzer Zeitdauer zerstört werden.

2. Verfahren nach Anspruch 1, **dadurch gekennzeichnet, daß** die Verschweißung durch Widerstandsschweißen, insbesondere Kondensatorentladungsschweißen erfolgt.

3. Verfahren nach einem der Ansprüche 1 oder 2, **dadurch gekennzeichnet, daß** die Berührungsflächen während des Verschweißens bzw. während und nach der Zerstörung der Oxidschichten mit inertem Gas, insbesondere Stickstoff, gespült werden.

4. Verfahren nach einem der Ansprüche 1 bis 3, **dadurch gekennzeichnet, daß** mindestens eine der einander berührenden Flächen vor dem Verschweißen mit einem Flußmittel in flüssigem, pastösem oder pulverartigem Zustand versehen wird.

5. Verfahren nach einem der Ansprüche 1 bis 4, **dadurch gekennzeichnet, daß** mindestens einige Teilbereiche der Berührungsflächen zwischen den Rippen (2) und den Rohren (1) miteinander verklebt werden.

6. Verfahren nach einem der Ansprüche 1 bis 5, **dadurch gekennzeichnet, daß** mindestens einige Teilbereiche der Berührungsflächen zwischen den Rippen (2) und dem Rohr (1) durch Durchsetzfügen miteinander formschlüssig verbunden werden.

7. Verfahren nach Anspruch 6, **dadurch gekennzeichnet, daß** im Bereich mindestens einiger Fügestellen zusätzlich zum hierdurch erzeugten Formschluß eine Verschweißung und/oder Verklebung stattfindet.

## Claims

1. Method of manufacturing corrosion-resistant heat exchangers using tubes (1) which are provided at least over a part of their surface with ribs (2) which enlarge the heat-exchange area, wherein the tubes (1) and/or ribs (2) consist of light metal, in particular aluminium, or of materials which are coated or plated with light metal, and at least some sub-regions of the contact area between the base region of the ribs (2) and the circumferential area of the tubes (1) are welded together, **characterised in that** the oxide layers at the contact areas are destroyed prior to the actual welding operation by at least one high-energy current pulse of short duration.

2. Method according to Claim 1, **characterised in that** the welding is carried out by resistance welding, in particular capacitor discharge welding.

3. Method according to either of Claims 1 and 2, **characterised in that** the contact areas are flushed during welding or during and after destruction of the oxide layers with inert gas, in particular nitrogen.

4. Method according to any one of Claims 1 to 3, **characterised in that** at least one of the mutually contacting areas is provided with a flux in a liquid, pasty or powdery state prior to welding.

5. Method according to any one of Claims 1 to 4, **characterised in that** at least some sub-regions of the contact areas between the ribs (2) and the tubes (1) are glued together.

6. Method according to any one of Claims 1 to 5, **characterised in that** at least some sub-regions of the contact areas between the ribs (2) and the tube (1) are positively connected together by penetration-joining.

7. Method according to Claim 6, **characterised in that** welding and/or gluing is carried out in the region at least of some joints in addition to the positive connection hereby produced.

## Revendications

1. Procédé destiné à la fabrication d'échangeurs de chaleur résistant à la corrosion avec utilisation de tubes (1) munis d'ailettes (2) agrandissant la surface d'échange thermique, au moins sur une partie de leur surface, les tubes (1) et/ou les ailettes (2) étant en métal léger, notamment en aluminium, ou en matériaux revêtus ou plaqués de métal léger, et au moins quelques zones partielles de la surface de contact entre la zone de pied des ailettes (2) et la surface d'enveloppe des tubes (1) étant soudées,
**caractérisé en ce que**,
avant le processus de soudage proprement dit, les couches d'oxydation sur les surfaces de contact sont détruites par au moins une impulsion de courant à haute énergie et de courte durée.

2. Procédé selon la revendication 1, **caractérisé en ce que** le soudage est effectué par soudage par résistance, notamment par soudage à déchargement de condensateur.

3. Procédé selon la revendication 1 ou 2, **caractérisé en ce que**, pendant le soudage, ou pendant et après la destruction des couches d'oxydation, les surfaces de contact sont balayées avec du gaz inerte, notamment de l'azote.

4. Procédé selon l'une quelconque des revendications 1 à 3, **caractérisé en ce que**, avant le soudage, un fondant à l'état liquide, pâteux ou pulvérulent est appliqué sur l'une au moins des surfaces qui sont en contact entre elles.

5. Procédé selon l'une quelconque des revendications 1 à 4, **caractérisé en ce que**, au moins quelques zones partielles des surfaces de contact entre les ailettes (2) et les tubes (1) sont collées entre elles.

6. Procédé selon l'une quelconque des revendications 1 à 5, **caractérisé en ce que**, au moins quelques zones partielles des surfaces de contact entre les ailettes (2) et les tubes (1) sont reliées entre elles par complémentarité de formes moyennant un assemblage par imbrication.

7. Procédé selon la revendication 6, **caractérisé en ce que**, en plus de la liaison effectuée par complémentarité de formes, un soudage et/ou un collage a lieu dans la zone d'au moins quelques points d'assemblage.
